# EUROPÄISCHE PATENTANMELDUNG

(11) **EP 0 938 024 A1**
(43) Veröffentlichungstag der Anmeldung: **25.08.1999**
(21) Anmeldenummer: 99890027.8
(22) Anmeldetag: 28.01.1999
(51) Int. Cl.: G03B 31/04

(54) **Einrichtung zur Synchronisierung von Tonfilmaufnahmen**

(30) Priorität: 18.02.1998 AT 28898
(71) Anmelder: Bauer, Fritz, A-3002 Purkersdorf (AT)
(72) Erfinder: Bauer, Fritz, A-3002 Purkersdorf (AT)
(74) Vertreter: Gibler, Ferdinand, Dipl.-Ing. Dr. techn.

(57) **Zusammenfassung**

Einrichtung zur Synchronisierung von Bild und Ton für Tonfilmaufnahmen mit einer Filmkamera und einem Tonaufnahmegerät, über welche eine Zeitinformation, z.B. Tag, Stunde, Minute o.ä. jeweils als Synchronmarkierung auf dem Bildträger und auf dem Tonträger aufnehmbar ist, und welche eine Anzeigevorrichtung (5) zur Anzeige eines maschinenlesbaren Kodes umfaßt, welcher Kode die aktuelle Zeitinformation in kodierter Form vorzugsweise laufend wiedergibt und von der Filmkamera optisch aufnehmbar ist.

## Beschreibung

Die Erfindung betrifft eine Einrichtung zur Synchronisierung von Bild und Ton für Tonfilmaufnahmen mit einer Filmkamera und einem Tonaufnahmegerät, über welche eine Zeitinformation, z.B. Tag, Stunde, Minute o.ä. jeweils als Synchronmarkierung auf dem Bildträger und auf dem Tonträger aufnehmbar ist.

Herkömmliche Bildaufzeichnungen auf photo-chemischen Bildträgern, die eine Belichtung und eine nachfolgende Entwicklung erfordern, benötigen eine dem Film entnehmbare Synchronisierungsinformation, die es bei der Bearbeitung im Filmstudio ermöglicht, Tonund Bildaufzeichnungen in zeitliche Übereinstimmung zu bringen.

Die Markierung einzelner Szenen bei Filmaufnahmen erfolgt in vielen Fällen mittels einer für diese Zwecke adaptierten Klappe, auf der Informationen, wie z.B. der Filmtitel, die Szenennummer, Unternummern, das Datum o.ä. so geschrieben stehen, daß diese von der Filmkamera aufgenommen und später bei der Filmbesichtigung bei Bedarf wieder abgelesen werden können. Der bewegliche Teil der Klappe wird bei Drehbeginn so betätigt, daß eine deutlich sichtbare Klappenbewegung und ein damit gekoppeltes, hörbares Klappengeräusch entsteht, sodaß damit sowohl die aufgenommenen Bilder als auch der von einem Tonaufnahmegerät aufgenommene Ton bei der Filmnachbearbeitung zur Synchronisierung von Bild und Ton herangezogen werden können.

Eine weitere Möglichkeit der Synchronmarkierung besteht darin, die Filmkamera und das Tongerät einen Zeitkode aufzeichnen zu lassen und somit gleiche Synchronmarkierungen auf dem Film und dem Tonband hervorzurufen. Dies bedeutet aber insbesondere für die Filmaufnahmekamera einen erhöhten technischen Aufwand, da während des realen Aufnahmevorganges mittels einer Aufbelichtungsvorrichtung die Synchroninformation auf das Filmnegativ, jedoch außerhalb des zur Darstellung der aufgenommenen Szene dienenden Bildformats, fortlaufend aufgebracht werden muß.

Besonders durch den Einsatz neuer, teilweise digitaler Bildbearbeitungs- bzw. Bildfertigstellungsmethoden ergibt sich die Notwendigkeit einer Zuordnung bzw. Identifizierung der Szenen oder der einzelnen Kader. Es soll also beispielsweise beim Transfer vom Filmnegativ auf Videoband die Zeitkode- oder Identinformation mitüberspielt werden. Dies geschieht üblicherweise durch ein Lesegerät, welches die am Rand des Negativs sichtbaren Informationen auf eine der Spuren des Videobandes überträgt.

Aufgabe der Erfindung ist es nun, eine Einrichtung der eingangs genannten Art anzugeben, mit deren Hilfe eine Zeitinformation vorzugsweise in kodierter Form auf technisch einfache Weise auf einen Film gebracht werden kann.

Weitere Aufgabe der Erfindung ist es, eine Einrichtung zu schaffen, die es ermöglicht, die auf dem Film aufgebrachte Zeitinformation nach der Entwicklung mit einfachen Mitteln zu lesen und auf ein anderes Aufzeichnungsmedium zu übertragen.

Erfindungsgemäß wird dies bei einer eingangs genannten Einrichtung dadurch erreicht, daß sie eine Anzeigevorrichtung zur Anzeige eines maschinenlesbaren Kodes umfaßt, welcher Kode die aktuelle Zeitinformation in kodierter Form, vorzugsweise laufend, wiedergibt und von der Filmkamera optisch aufnehmbar ist.

Die erfindungsgemäße Einrichtung wird nach dem Drehbeginn für kurze Zeit in den Bildausschnitt der Kamera gehalten, sodaß mit dieser der maschinenlesbare Kode, der die aktuelle Zeitinformation in kodierter Form laufend anzeigt, aufgenommen wird. Die so aufgenommene Zeitinformation ist nach dem Entwickeln des Filmes in Form des maschinenlesbaren Kodes auf den betreffenden Einzelbildnegativen abgebildet und kann von dort mittels einer optischen Lesevorrichtung ausgelesen und entschlüsselt werden. Die daraus sich ergebende Synchronisierungsinformation kann nun mit den vom Tonaufnahmegerät gewonnenen Signalen zur Synchronisierung von Bild und Ton weiterverarbeitet werden.

In weiterer Ausbildung der Erfindung kann vorgesehen sein, daß der Kode zusätzlich weitere Informationen beinhaltet, welche über eine der Anzeigevorrichtung zugeordnete Eingabevorrichtung eingebbar und mit der Anzeigevorrichtung kodiert anzeigbar sind.

Dadurch können für die Studiobearbeitung von einzelnen Szenen wichtige Sachverhalte aufgezeichnet und später wieder in beliebig darstellbarer Form zur Verfügung gestellt werden, wodurch ein mühsames direktes Ablesen dieser Informationen aus dem Negativeinzelbild vermeidbar ist.

In weiterer Ausbildung der Erfindung kann vorgesehen sein, daß der maschinenlesbare Kode durch einen, vorzugsweise durch Laserabtastung lesbaren, Strichkode gebildet ist.

Dadurch kann jedes Filmnegativ mit bereits vielfach bewährter Technologie eindeutig gekennzeichnet werden, ohne daß dazu eine außerhalb des Bildausschnittes eigens aufzuzeichnende Information aufbelichtet werden muß. Dabei kann etwa die Zeitinformation wie folgt zusammengesetzt sein: Jahr/Monat/Tag/Stunde/Minute/Sekunde. Weiters kann beispielsweise die jeweilige Kadernummer errechnet und angezeigt werden. Die LaserAbtastung ermöglicht auch ein sehr schnelles Bereitstellen der Zeitinformation, während dies bisher immer mühsam durch Ablesen vom Filmnegativ und durch Notieren der Daten erfolgen mußte, wenn an hohem technischen Aufwand gespart werden sollte.

Zur Erzeugung eines für das gesamte Filmpersonal hörbaren Signals bei Szenenbeginn kann gemäß einer weiteren Ausbildung der Erfindung vorgesehen sein, daß die Anzeigevorrichtung auf einem Filmszenenklappen-Mechanismus mit einer schwenkbaren Klappe angeordnet ist.

In weiterer Ausbildung der Erfindung kann vorgesehen sein, daß die Anzeigevorrichtung mit einem Zeitgeber verbunden ist, der über einen mit diesem verbindbaren zentralen Zeitgeber zusammen mit einem weiteren, dem Tonaufnahmegerät zugeordneten Zeitgeber in Synchronstellung rücksetzbar und auslösbar ist.

Auf diese Weise gelingt es, eine Übereinstimmung der auf dem Film und dem Tonband aufgenommenen Zeitinformation zu erreichen. Der Zeitgeber der erfindungsgemäßen Einrichtung kann zusammen mit dem Zeitgeber des Tonaufnahmegeräts durch eine handelsübliche Master-Clock gesetzt werden und zeigt von diesem Zeitpunkt für eine gewisse Zeit in Abhängigkeit von der Genauigkeit der zur Verfügung stehenden Taktfrequenz die Realzeit an. Damit können die während der Betriebszeit der Zeitgeber sich einstellenden Zeitfehler bei jedem Setzen durch die Master-Clock korrigiert werden.

Gemäß einer weiteren Ausführungsform der Erfindung kann vorgesehen sein, daß eine weitere Anzeigevorrichtung, vorzugsweise eine LED-Anzeige, zur Anzeige der Zeitinformation vorgesehen ist.

Damit kann die im maschinenlesbaren Kode wiedergegebene Information auch in einer lesbaren alphanumerischen Darstellung angezeigt werden, womit sowohl vor Ort als auch im Studio eine Möglichkeit der visuellen Überprüfung geschaffen wird.

Weiters betrifft die Erfindung ein Verfahren zur Synchronisierung einer Filmsequenz.

Aufgabe der Erfindung besteht darin, ein Verfahren anzugeben, das mit geringem technischen Aufwand eine Bereitstellung und automatisierte Weiterverarbeitung der Synchronisierungsinformation ermöglicht.

Erfindungsgemäß wird dies dadurch erreicht, daß am Beginn der Aufnahme die Zeitinformation in Form eines maschinenlesbaren Kodes, vorzugsweise Strichkodes, mit der Filmkamera aufgenommen wird, und daß nach der Negativentwicklung des Films der auf jedem Einzelbild enthaltene Strichkode mittels eines Lesegeräts, vorzugsweise eines Laser-Lesegeräts, abgetastet und dekodiert wird.

Dadurch kann ein selbsttätiges Ablesen der auf dem Film festgehaltenen Zeitinformation durchgeführt werden, ohne daß dafür ein eigenes Belichtungsfeld auf dem Negativ beansprucht werden muß.

In weiterer Ausbildung der Erfindung kann vorgesehen sein, daß bei der Übertragung der Bildinformation vom Film auf ein Videoband der Inhalt der Strichkode-Information jedes Film-Einzelbildes auf der jedem Video-Einzelbild zugeordneten Zeitkode-Spur des Videobandes mitaufgezeichnet wird, und daß jedem nachfolgenden Videobild die synchronisierte Zeitinformation zugeordnet wird.

Auf diese Weise gelingt es, die Überspielung von Film auf Video automatisiert durchzuführen. Die im aufgenommenen, maschinenlesbaren Kode beinhaltete Information wird mittels optischer Abtastung eingelesen, entschlüsselt und in entsprechender Form auf das Videoband übertragen, wodurch die richtige Zeitrelation zur Tonspur automatisch einstellbar wird. Mit Hilfe des Videobandes läßt sich nunmehr das Bearbeiten, insbesondere das Schneiden des Filmes vollelektronisch durchführen, wobei die zu entfernenden bzw. einzufügenden Kader aufgrund der zur Verfügung stehenden Zeitinformation genau identifiziert werden können.

In weiterer Ausbildung der Erfindung kann vorgesehen sein, daß das Videoband mittels der synchronisierten Zeitinformation elektronisch bearbeitet wird, und daß die sich ergebenden Änderungen den Filmkadern des entwickelten Films zugeordnet und durch Endbearbeitung des Films, z.B durch Schneiden und Kleben, auf diesen übertragen werden.

Sobald der Film nun in seiner elektronischen Form zur Gänze fertiggestellt ist, wird die Bearbeitungsinformation verwendet, um den ursprünglichen Negativfilm genau nach den aufgezeichneten, elektronischen Schneideinformationen zu verarbeiten. Der Vorteil dieser Methode besteht darin, daß der sehr empfindliche Negativfilm in einem Arbeitsgang in seine Endfassung gebracht werden kann, während bisher abwechselnd die Änderung und Überprüfung der einzelnen Filmszenen in teilweise sehr mühsamer Arbeit vorgenommen werden mußte.

Nachstehend wird die Erfindung anhand eines in den Zeichnungen dargestellten Ausführungsbeispiels eingehend erläutert. Es zeigt dabei
Fig. 1 eine Einrichtung zur Synchronisierung nach dem Stand der Technik;
Fig.2 eine Ausführungsform einer erfindungsgemäßen Einrichtung und
Fig.3 ein Ablaufdiagramm einer Ausführungsform des erfindungsgemäßen Verfahrens.

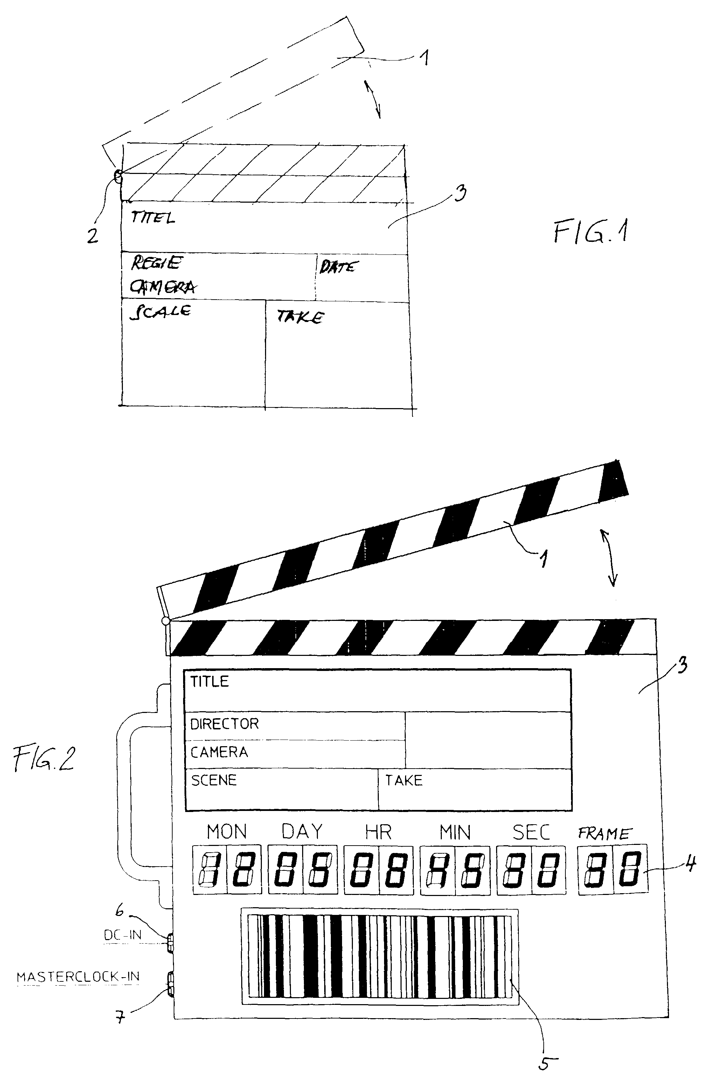

In Fig. 1 ist eine aus dem Stand der Technik bekannte Einrichtung 3 zur Synchronisierung von Bild und Ton für Tonfilmaufnahmen dargestellt, an der eine über ein Gelenk 2 verschwenkbare Klappe 1 vorgesehen ist, die zum Hervorrufen eines deutlich hörbaren Klappgeräusches verwendet wird. Damit wird der Beginn einer Filmsequenz sowohl akustisch als auch optisch markiert. Mit Hilfe dieses Signals kann bei der Nachbearbeitung im Studio Bild und Ton in zeitliche Übereinstimmung gebracht werden. Die auf der Klappe aufgeschriebenen Angaben über Titel des Filmwerks, den Regisseur, das Datum und die Szenennummer sind zusätzliche Informationen, die bei Betrachtung des Filmnegativs wiedergewonnen werden können. Es sind auch Einrichtungen bekannt, über welche eine Zeitinformation, z.B. Tag, Stunde, Minute o.ä. jeweils als Synchronmarkierung auf dem Bildträger und auf dem Tonträger aufnehmbar ist. Dafür wird aber eine technisch aufwendige zusätzliche Belichtungsvorrichtung benötigt, die einen von der Bildfläche gesonderten Teil des Filmnegativs in Anspruch nimmt.

Eine Ausführungsform der erfindungsgemäßen Einrichtung zeigt Fig.2, welche eine Anzeigevorrichtung 5 zur Anzeige eines maschinenlesbaren Kodes umfaßt, die auf dem Filmszenenklappen-Mechanismus 3 mit der schwenkbaren Klappe 1 angeordnet ist. Die erfindungsgemäße Einrichtung kann aber auch in einem anderen Gehäuse ohne Klappenmechanismus untergebracht sein.

Der angezeigte Kode gibt die aktuelle Zeitinformation in kodierter Form laufend wieder, sodaß sie von der Filmkamera optisch aufnehmbar ist. Es ist aber auch denkbar, daß die Zeitinformation nur in bestimmten Zeitabständen angezeigt bzw. aktualisiert wird.

Im Ausführungsbeispiel gemäß Fig. 2 wird ein üblicher und vielfach verwendeter Strichkode, der mittels Laserabtastung lesbar ist, als maschinenlesbarer Kode eingesetzt, es kann aber jeder andere dafür geeignete Kode Verwendung finden.

Der maschinenlesbare Kode, der über die Anzeigevorrichtung 5 abgebildet wird, kann zusätzlich weitere Informationen beinhalten, welche über eine der Anzeigevorrichtung 5 zugeordnete Eingabevorrichtung eingebbar und mit der Anzeigevorrichtung kodiert anzeigbar sind.

Die Anzeigevorrichtung 5 ist mit einem Zeitgeber verbunden, der über einen mit diesem verbindbaren zentralen Zeitgeber (Master-Clock) zusammen mit einem weiteren, dem Tonaufnahmegerät zugeordneten Zeitgeber in Synchronstellung rücksetzbar und auslösbar ist. Diese Zeitgeber-Vorrichtungen sind in Fig.2 nicht abgebildet, sind ihrer Bauart nach aber allgemein bekannt. An der Seite der Einrichtung 3 ist für das Herstellen der Verbindung zu dem zentralen Zeitgeber eine Steckerbuchse 7 neben einer Gleichspannungsversorgungs-Buchse 6 vorgesehen. Über die Buchse 7 kann der zentrale Zeitgeber an die erfindungsgemäße Einrichtung 3 angeschlossen und der darin befindliche Zeitgeber auf die genauere Zeitbasis des zentralen Zeitgebers rückgesetzt werden.

Zusätzlich ist auf der erfindungsgemäßen Einrichtung 3 eine weitere Anzeigevorrichtung 4, vorzugsweise eine LED-Anzeige, zur Anzeige der Datums- und Zeitinformation vorgesehen, mit deren Hilfe die im Strichkode kodiert enthaltene Information überprüfbar ist. In dem gezeigten Ausführungsbeispiel sind die folgenden Angaben angezeigt: Monat, Tag, Stunde, Minute, Sekunde und der jeweils unter Berücksichtigung der Bildwechselfrequenz errechnete, aktuelle Filmkader.

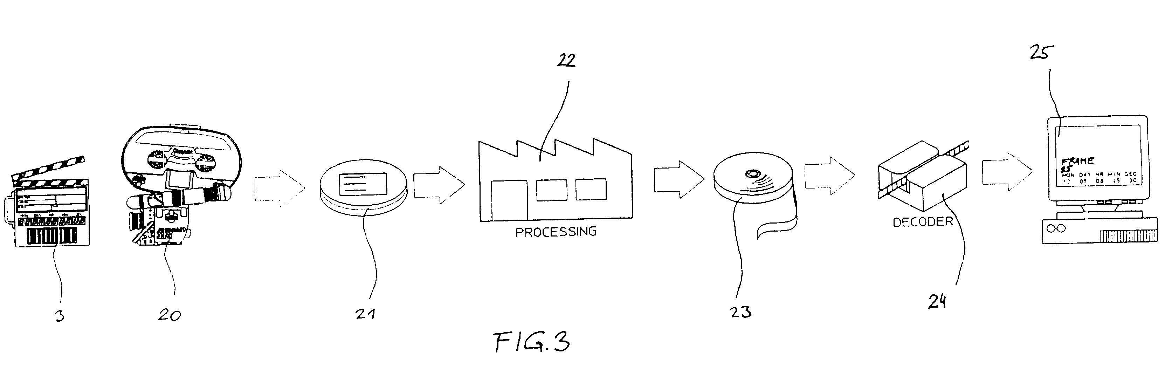

Ein mit der erfindungsgemäßen Einrichtung durchführbares Verfahren zur Synchronisierung einer Filmsequenz ist in Fig. 3 schematisch abgebildet, dessen erster Schritt im wesentlichen darin besteht, daß am Beginn der Aufnahme die Zeitinformation in Form eines maschinenlesbaren Kodes, vorzugsweise Strichkodes, mit einer Filmkamera 20 aufgenommen wird.

Nach den Dreharbeiten wird das belichtete Negativ 21 in einer Entwicklungsanlage 22 zu einem entwickelten Filmnegativ 23 verarbeitet.

Nach der erfolgten Negativentwicklung wird der auf jedem Einzelbild des Filmnegativs 23 enthaltene Strichkode mittels eines Lesegeräts 24, das vorzugsweise in Form eines Laser-Lesegeräts ausgeführt ist, abgetastet und dekodiert.

Bei der nachfolgenden Übertragung der Bildinformation vom Film auf ein Videoband wird der Inhalt der Strichkode-Information jedes Film-Einzelbildes auf der jedem Video-Einzelbild zugeordneten Zeitkode-Spur des Videobandes mitaufgezeichnet, und jedem nachfolgenden Videobild die synchronisierte Zeitinformation zugeordnet.

Schließlich wird das Videoband mittels der synchronisierten Zeitinformation elektronisch bearbeitet, indem die gewünschten Szenenfolgen festgelegt werden. Dabei werden z.B. im Schneidevorgang Einzelbilder hinzugenommen oder weggelassen.

Die sich ergebenden Änderungen werden den Filmkadern des entwickelten Films zugeordnet und durch Endbearbeitung des Films, z.B. durch Schneiden und Kleben, auf diesen übertragen. Durch die mit Hilfe der Strichkode-Information gewonnene feste Zeitrelation zwischen Bild und Ton wird deren vollständige zeitliche Übereinstimmung auch nach Durchführung von Bearbeitungsvorgängen ermöglicht.

## Patentansprüche

1. Einrichtung zur Synchronisierung von Bild und Ton für Tonfilmaufnahmen mit einer Filmkamera und einem Tonaufnahmegerät, über welche eine Zeitinformation, z.B. Tag, Stunde, Minute o.ä. jeweils als Synchronmarkierung auf dem Bildträger und auf dem Tonträger aufnehmbar ist, **dadurch gekennzeichnet,** daß sie eine Anzeigevorrichtung (5) zur Anzeige eines maschinenlesbaren Kodes umfaßt, welcher Kode die aktuelle Zeitinformation in kodierter Form, vorzugsweise laufend, wiedergibt und von der Filmkamera optisch aufnehmbar ist.

2. Einrichtung nach Anspruch 1, **dadurch gekennzeichnet,** daß der Kode zusätzlich weitere Informationen beinhaltet, welche über eine der Anzeigevorrichtung (5) zugeordnete Eingabevorrichtung eingebbar und mit der Anzeigevorrichtung kodiert anzeigbar sind.

3. Einrichtung nach Anspruch 1 oder 2, **dadurch gekennzeichnet,** daß der maschinenlesbare Kode durch einen, vorzugsweise durch Laserabtastung lesbaren, Strichkode gebildet ist.

4. Einrichtung nach Anspruch 1, 2 oder 3, **dadurch gekennzeichnet,** daß die Anzeigevorrichtung auf einem Filmszenenklappen-Mechanismus mit einer schwenkbaren Klappe (1) angeordnet ist.

5. Einrichtung nach Anspruch 1 bis 4, **dadurch gekennzeichnet**, daß die Anzeigevorrichtung (5) mit einem Zeitgeber verbunden ist, der über einen mit diesem verbindbaren zentralen Zeitgeber zusammen mit einem weiteren, dem Tonaufnahmegerät zugeordneten Zeitgeber in Synchronstellung rücksetzbar und auslösbar ist.

6. Einrichtung nach Anspruch 1 bis 5, **dadurch gekennzeichnet,** daß eine weitere Anzeigevorrichtung (4), vorzugsweise eine LED-Anzeige, zur Anzeige der Zeitinformation vorgesehen ist.

7. Verfahren zur Synchronisierung einer Filmsequenz, bei dem eine Einrichtung nach einem der vorhergehenden Ansprüche verwendet wird, **dadurch gekennzeichnet,** daß am Beginn der Aufnahme die Zeitinformation in Form eines maschinenlesbaren Kodes, vorzugsweise Strichkodes, mit der Filmkamera aufgenommen wird, und daß nach der Negativentwicklung des Films der auf jedem Einzelbild enthaltene Strichkode mittels eines Lesegeräts, vorzugsweise eines Laser-Lesegeräts, abgetastet und dekodiert wird.

8. Verfahren nach Anspruch 7, **dadurch gekennzeichnet,** daß bei der Übertragung der Bildinformation vom Film auf ein Videoband der Inhalt der Strichkode-Information jedes Film-Einzelbildes auf der jedem Video-Einzelbild zugeordneten Zeitkode-Spur des Videobandes mitaufgezeichnet wird, und daß jedem nachfolgenden Videobild die synchronisierte Zeitinformation zugeordnet wird.

9. Verfahren nach Anspruch 8, **dadurch gekennzeichnet,** daß das Videoband mittels der synchronisierten Zeitinformation elektronisch bearbeitet wird, und daß die sich ergebenden Änderungen den Filmkadern des entwickelten Films zugeordnet und durch Endbearbeitung des Films, z.B durch Schneiden und Kleben, auf diesen übertragen werden.
